# EUROPEAN PATENT SPECIFICATION

(11) **EP 0 864 958 B1**
(45) Date of publication and mention of the grant of the patent: **09.07.2003**
(21) Application number: 98300737.8
(22) Date of filing: 02.02.1998
(51) Int. Cl.: G05G 9/047

(54) **Pointing device for information processing apparatus**
Steuervorrichtung für Informationsverarbeitungsgeräte
Manette de commande pour dispositifs de traitement d'information

(30) Priority: 07.03.1997 JP 5315897
(43) Date of publication of application: 16.09.1998
(73) Proprietor: International Business Machines Corporation, Armonk, N.Y. 10504 (US)
(72) Inventor: Kawachiya, Kiyokuni, Kawasaki-shi, Kanagawa-ken (JP); Ishikawa, Hiroshi, Shizuoka-shi, Shizuoka-ken (JP)
(74) Representative: Litherland, David Peter

(56) References cited:
- EP-A- 0 151 479
- GB-A- 2 110 428
- US-A- 4 616 115

## Description

The present invention relates to a pointing device, an information processing apparatus which employs the pointing device, and a method (not forming part of the present invention) for manipulating an information processing apparatus.

Subminiature portable information processing apparatus, represented by personal digital assistants (PDAs), have been employed in various places due to the nature of the apparatus. In addition to the use of the portable information processing apparatus in vehicles such as trains and automobiles, if the apparatus is easily able to have access to information while standing in such a vehicle or while walking, it will be more convenient for use. However, in these circumstances, there are many cases where only one hand can be used.

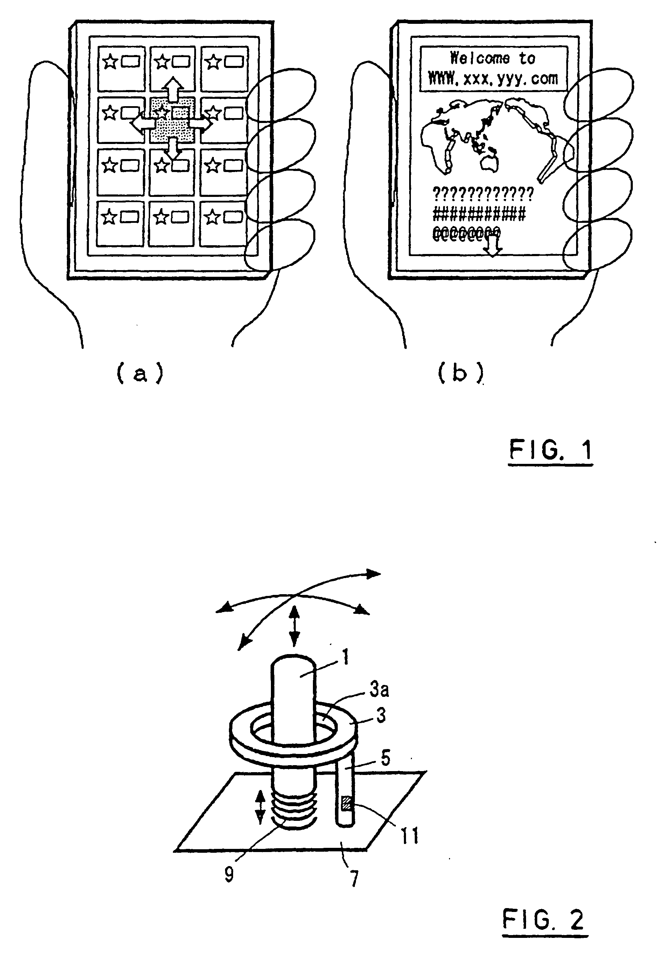

The use for subminiature portable information processing apparatus that users can hold in one hand, as previously described, is mainly to access information, that is, information browsing. For example, the user selects a menu item as shown on the left side of Figure 1 and performs manipulation to display the contents of the selected menu item as shown on the right side of Figure 1. On the right side of Figure 1, the display device of the portable information processing apparatus is small and all information within the menu cannot be displayed at a time, so there are cases where a scroll operation is performed. Such information browsing does not require that various information is input by an input means such as a keyboard, but, on the other hand, since there is the possibility that the user will employ this portable information processing apparatus while standing or walking, as described above, there is a need to design the manipulation interface so that the apparatus can be more easily manipulated than usual.

Now, if it is considered what requirements are imposed on the aforementioned interface, they will be as follows. That is, (1) To be able to perform digital movement from a current item to the next selectable item. The digital movement means that movement is performed from item to item. (2) To be able to perform two-dimensional movement from a current item to upper, lower, left, and right items. It is necessary to be able to move to all points on a display screen. (3) To be able to perform high-speed movement from a current item to a far item and scrolling. It is necessary to be able to perform continuous manipulation in an analog manner. (4) To be able to perform manipulation with one hand, including selection (invocation) of an item. It is necessary to be able to perform so-called click and double click. Particularly, if positioning cannot be easily made, double click cannot be performed. (5) To be able to perform manipulation even by feel. If operating circumstances are considered, a physical response to the manipulating hand will be an important element.

On the other hand, the following input devices are known as conventional input devices for portable information processing apparatus. (a) Direct input by a pen and a touch pad. (b) Depressible digital dials. In the digital dial, if the dial is turned, a cursor will be moved in a one-dimensional direction, and when giving selection, the dial can be depressed. The dial is used for digital input. Each time the dial is turned a constant angle, a feedback is given to users and input of one unit is performed. (c) Combination of cursor keys and a switch. They are cursor keys provided in a keyboard or a cross-shaped key provided in some of small game machines for indicating a direction, and a switch for selection. (d) Combination of an analog input device (such as a track ball) and a switch.

The cursor key basically indicates movement which is performed one unit at a time. If the key continues to be pushed, the cursor will be moved continuously, but this merely means that digital inputs arise continuously. On the other hand, track balls or force sensitive input devices, provided within the keyboard of a notebook computer produced by IBM, indicate continuous movement corresponding to the amount of rotation of the ball or the strength of a force applied to the force sensitive input device, and therefore they give information processing apparatus an analog input.

The aforementioned input device (a) has the advantage that handwritten figures and characters can be directly input but has the disadvantage that both hands are needed even when it is employed for simple menu manipulation. Also, groping manipulation is difficult. The aforementioned input device (b) makes groping manipulation by one hand possible, but it requires mode switching, for example, when moving menu items right and left, because the device gives a one-dimensional input. The aforementioned input device (c) gives a two-dimensional input and therefore does not cause a problem such as (b). However, since an additional switch generally is needed for item selection, one-hand manipulation becomes difficult. In addition, in the input devices (b) and (c), high-speed movement between far items is not easy. The aforementioned input device (d) can easily perform high-speed movement because it gives a two-dimensional analog input, but it requires an additional switch for item selection, as in the case of (c). In addition, digital movement to an adjacent item and groping manipulation are difficult. Thus, it is found that any of these input devices does not completely meet the aforementioned 5 requirements. Table 1 shows whether or not each of the aforementioned input methods meets the 5 requirements. In Table 1, o means that an input method meets a requirement, Δ means that an input method has difficulty slightly but can deal with, and x means that an input method does not meet a requirement.

**[Table 1]**

| | 1. Digital movement | 2. Two-dimensional movement | 3. High-speed movement | 4. One-hand manipulation | 5. Groping manipulation |
|---|---|---|---|---|---|
| a. Touch pad | ○ | ○ | ○ | × | × |
| b. Depressable dial | ○ | × | Δ | ○ | ○ |
| c. Cursor key | ○ | ○ | Δ | Δ | ○ |
| d. Track ball | × | ○ | ○ | Δ | × |

In Japanese Published Unexamined Patent Application No. 4-263308, by moving a manipulation knob left and right, back and forth, and up and down, a detecting sensor section outputs a signal about an X, Y, and Z direction in correspondence with the direction in which the manipulation knob is moved. Furthermore, by providing a rotary encoder which outputs a signal by rotating the manipulation knob, a joy stick can set a numerical value in each direction. This joy stick can indicate X, Y, and Z directions, but cannot set a numerical value by moving the manipulation knob in the direction. Therefore, the user cannot manipulate the joy stick by intuition. There is no description of an insensitive zone. Also, it is described that the input in the Z direction can be employed as a mere switch. For X and Y directions, there is no description of a method which makes the aforementioned analog and digital inputs possible.

Japanese Published Unexamined Patent Application No. 61-147326 discloses an input device having a structure where a lever is rotatable on its lower end in an arbitrary direction and a circular plate is fixed to the lever by insertion, and 4 tack switches are provided away from the outer circumference of the circular plate by a predetermined length so that the switches make a right angle with each other. This input device has a structure where the lever returns to its original position if the user's hold of the lever is released. Furthermore, for the z-axis direction, information as to the manipulation of the lever can be obtained with a slide volume knob or a switch. It is described that the detection of the displacements in x-axis and y-axis directions can employ not a tack switch but a displacement-electric quantity conversion element. This input unit is constructed so that the displacements in x-axis and y-axis directions can be detected with 4 detectors making a right angle with each other. Therefore, in the case where it is desired that the lever is continuously varied in direction, that is, in the case where the lever is moved while both the direction from the x-axis direction to the y-axis direction and the displacement in that direction remain indicated, there are cases where the continuous movement of the lever cannot be continuously detected, because no detector is provided between the x axis and the y axis.

Japanese Published Unexamined Patent Application No. 2-188819 discloses that a mouse indicates horizontal movement and that if a specific mouse button is pushed, a predetermined item will be moved one unit at a time. In such a device, an analog input is indicated with the ball of the mouse and a digital input is performed with the button of the mouse. However, since a digital input cannot be indicated with the ball of the mouse which indicates position change, a predetermined item can be only moved one unit at a time. That is, movement of an item cannot be performed in an arbitrary direction. Also, this input device cannot be manipulated with one hand, because it employs a mouse.

Japanese Published Unexamined Patent Application No. 59-33539 discloses a device where, when the inclination of a joy stick is within a predetermined range, a marker on the display screen is moved in correspondence with the inclination and, when the inclination exceeds the predetermined range, the marker is repeatedly moved in the direction by a constant quantity at a time. It is described that this device has both a mode where movement of a marker is small and positioning is easy and a mode of moving a marker at high speed, but only the marker can be manipulated on display screen. Also, no description is made of manipulation in a z-axis direction and an insensitive zone. Furthermore, this device has the disadvantage that manipulation will be difficult if the user does not view the display screen, because switching of modes is determined by the inclination of the joy stick.

Japanese Published Examined Patent Application No. 64-8846 discloses a device which continuously outputs a cursor-moving pulse when the inclination of a joy stick is greater than a predetermined angle for a period longer than a predetermined time. The device also outputs a single cursor-moving pulse when the inclination of the joy stick is greater than the predetermined angle for a period shorter than the predetermined time. Even in this device, what is manipulated in both modes is only a cursor. Also, there is no description of the manipulation in a z-axis direction. Furthermore, this device has the disadvantage that manipulation will be difficult if the user does not view the display screen, because made switching is determined by the inclination of the joy stick and the time of the inclination.

Japanese Published Unexamined Patent Application No. 5-241502 discloses that scrolling of a display screen is performed with a joy stick. However, this publication does not disclose that the scroll operation and other different operations are combined and executed.

Note that an example of a pointing device provided on a keyboard is described in Japanese Published Unexamined Patent Application No. 7-302162. In this publication there is disclosed a device where force is applied to a stick provided on the keyboard in x-axis and y-axis directions and where strain, produced in the stick by the force, is detected by a strain gauge, an electrostatic capacity detection sensor, a magnetic detection sensor, or a pressure sensitive detection sensor. In this device, no description is made of an input in a z-axis direction, and only an analog input is possible.

On the other hand, in IBM TDB (95-07, p 487), for a nearly similar structure, it is described that a pressure sensor is provided under a stick to detect a vertical input from the stick and that emulation is performed with a 3-button mouse along with two buttons normally provided. However, this publication, as with the above-mentioned Japanese Published Unexamined Patent Application No. 7-302162, does not disclose that a digital input is performed only with the manipulation of the stick.

US 4616115 describes a switching device in which switches detect lateral movement in a number of discrete directions and also movement in a vertical direction.

According to a first aspect of the invention there is provided a pointing device comprising: a stick having an axis; a vector detection mechanism for detecting motion of the stick in a direction substantially perpendicular to the stick axis, the mechanism being located around and physically spaced apart from the stick to define an empty void and physically insensitive zone therebetween in which zone the vector detection mechanism does not detect motion of the stick, and wherein the vector detection mechanism outputs a signal corresponding to a contact direction and the strength of a force applied in the contact direction when the stick physically contacts the vector detection mechanism; and a detector for detecting a force applied along the axial direction of the stick.

As will be described below in relation to preferred embodiments of the invention, an input device for achieving the aforementioned objects has a stick, a vector detection mechanism placed away from the stick by a predetermined distance so as to turn around an axis of the stick, for outputting a signal corresponding to a contact direction and the strength of a force applied in the contact direction when the vector detection mechanism contacts with the stick, and a detector for detecting a force applied in an axial direction of the stick. Between the stick and the vector detection mechanism, there is provided space. This space constitutes a physical insensitive zone. By providing such a physical insensitive zone, a cursor on a display screen does not move if the stick does not contact with the vector detection mechanism. Therefore, even in groping manipulation, manipulation such as click can be performed at a fixed place without causing unintentional movement, by the detector which detects a force applied in the axial direction of the stick. Also, the vector detection mechanism is placed so as to turn around the axis of the stick. Therefore, as previously described, even if the stick is moved along the vector detection mechanism, the mechanism can sufficiently follow the movement and continuously indicate the strength and direction of the applied force. Placing the mechanism so as to turn around the axis of the stick is intended to mean that the mechanism is placed so as to substantially turn around the axis. Therefore, in some cases, a notch may be provided in the mechanism.

The pointing device may further have a mechanism for returning the stick, shifted from its initial position, to the initial position. In this case, if a user, who tries to perform a digital input, tilts the stick in a desired direction to push the vector detection mechanism and then release the hold of the stick, the stick will return to its initial position.
Therefore, the user can obtain a feeling of click in the desired direction, and groping manipulation becomes easy.

The detector for detecting a force applied in the axial direction of the stick may be a switch. A switch which can input ON/OFF information is sufficient for selection of an item. On the other hand, if an analog input is needed in a vertical direction, it is also possible to provide a pressure sensor. This can be employed for analog indication in a z-direction and zooming.

The switch may be provided in the stick. The switch may also be provided on either end of the stick or in the intermediate portion of the stick.

The switch may be provided at a position which is pushed by one end of the stick when the other end of the stick is pushed in the axial direction of the stick. That is, the switch can also be provided on another member which is on the extension of the axis of the stick.

The aforementioned vector detection mechanism may include a member that is placed around the stick so as to be away from the stick by a predetermined distance and that has a circular portion which-is contacted by the stick. The mechanism may further include a sensor for detecting the strength and direction of a force applied to the member by the stick. If the member, which is contacted by the stick, is circular in shape (i.e., the stick passes through a circular hole formed in the member), the direction of a force applied to the member by the stick will be detected appropriately. The sensor may be provided directly on this member, and it is also possible to detect the strength and the direction of a force which is transmitted through a support member that supports this member. The type of the sensor may be a strain gauge type, a pressure sensor type, or an electrostatic capacity sensor type.

The aforementioned pointing device is more effective if it is provided in a portable information processing apparatus, as previously described in relation to Figure 1. Alternatively, the pointing device may be connected to an ordinary information processing apparatus as a separate device, or it may be provided on an ordinary keyboard.

When this pointing device is provided in a portable information processing apparatus, it may be provided on the side surface of the apparatus so that the axis of the stick is substantially parallel to the display device. The pointing device may also be provided on the same surface of the display device.

According to a second aspect of the invention there is provided a portable information processing apparatus comprising the claimed pointing device, and a display device. The portable information processing apparatus further comprises a controller for, in response to a signal output from the vector detection mechanism, judging whether an evaluation value of the force vector satisfies a predetermined condition, and for instructing the execution of a first kind of manipulation according to the evaluation value when the evaluation value satisfies the predetermined condition, and for instructing the execution of a second kind of manipulation when the evaluation value does not satisfy the predetermined condition. With this, a mode change can be performed. That is, if the evaluation value satisfies a predetermined condition, the signal from the pointing device is taken to be an analog input. If the evaluation value does not satisfy a predetermined condition, the signal is taken to be a digital input. The first kind of manipulation may be continuous manipulation which scrolls the screen of a display device of the information processing apparatus, and the second kind of manipulation may be manipulation which changes a focused item on the screen by one unit at a time. Also, the evaluation value of the input signal may be a value corresponding to the magnitude of a vector signal which is output from the pointing device. In such a case the predetermined condition is that the magnitude is greater than a predetermined threshold value. With this arrangement, the apparatus becomes most convenient for use.

Note that it will be apparent to those skilled in this art to realize the aforementioned manipulation by a program. It is also possible to carry out the described manipulation by electronic circuitry.

Preferred embodiments of the invention will now be described, by way of example only, with reference to the accompanying drawings in which:
Figure 1 is a diagram showing a display example of a portable information processing apparatus, a plurality of items being shown on the left side (a) and the contents of one item on the left side being shown on the right side (b);
Figure 2 is a schematic view showing the mechanical structure of the present invention;
Figure 3 is a diagram when the stick 1 in Figure 1 is tilted;
Figure 4 is a diagram showing an example of a mechanism which has a physical insensitive zone and which detects horizontal indication given by the stick 1;
Figure 5 is a diagram showing an example of an alternative mechanism which has a physical insensitive zone and which detects horizontal indication given by the stick 1;
Figure 6 is a diagram showing an example of a further alternative mechanism which has a physical insensitive zone and which detects horizontal indication given by the stick 1;
Figure 7 is a diagram showing an example of another mechanism which has a physical insensitive zone and which detects horizontal indication given by the stick 1;
Figure 8 is a diagram showing an example of a further mechanism which has a physical insensitive zone and which detects horizontal indication given by the stick 1;
Figure 9 is a cross sectional view of Figure 8;
Figure 10 is a diagram showing an example of an alternative mechanism which has a physical insensitive zone and which detects horizontal indication given by the stick 1;
Figure 11 is a diagram showing an example of a mechanism which has a physical insensitive zone and which detects horizontal indication given by the stick 1;
Figure 12 is a diagram showing an example of a mechanism which detects a force in a direction perpendicular to a mounting surface 7;
Figure 13 is a diagram showing an example of a mechanism which detects a force in a direction perpendicular to a mounting surface 7;
Figure 14 is a diagram showing an example of a mechanism which detects a force in a direction perpendicular to a mounting surface 7;
Figure 15 is a vertical sectional view showing an example of a mechanism which returns and holds the stick 1 to its initial position;
Figure 16 is a vertical sectional view showing the state in Figure 15 when the stick 1 is tilted;
Figure 17 is a vertical sectional view showing an example of a mechanism which returns and holds the stick 1 to its initial position;
Figure 18 is a vertical sectional view showing an example of a mechanism which returns and holds the stick 1 to its initial position;
Figure 19 is a diagram showing an example of another use for a method of manipulating the present invention;
Figure 20 is a diagram showing a state machine for controlling an information processing apparatus;
Figure 21 is a diagram showing an example of a pointing device provided on the side surface of an information processing apparatus; and
Figure 22 is a diagram showing an example of a pointing device provided on the front surface of an information processing apparatus.

The following reference numerals are used in the description:
- 1: Stick
- 1a: Stick's upper portion
- 1b: Stick's lower portion
- 1d: Taper portion
- 1e: Protrusion
- 3: Ring
- 3a: Ring's inner surface
- 5: Support member
- 7: Mounting surface
- 9: Microswitch
- 11a, 11b, 11c, 11d: Sensor
- 17: Sleeve
- 15: Slit
- 19: Force detecting plate
- 21: Plate support board
- 23: Pressure sensor
- 25: Hole
- 27: Electrostatic capacity sensor
- 27a: Electrode
- 27b: Dielectric substance
- 29: Elastic body
- 31: Switch
- 33: Switch
- 35: Stick holding mechanism
- 37: Stick support plate
- 39a, 39b: Elastic body
- 500: Pointing device

### (1) Mechanical Structure

Initially, a description will be made of the mechanical structure of a pointing device. In Figure 2 there is shown a schematic view of the pointing device of the present invention. A stick 1 is provided so as to be substantially perpendicular to a mounting surface 7 and inserted through a ring 3. It is preferable that the centre of the ring 3 be aligned with that of the stick 1. It is also preferable that the inner portion of the ring 3 be formed into a circular shape; the user can continuously change the indication of a direction, but the inner configuration can alternatively be an ellipse similar to a circle. A support member 5 supports the ring 3 so that the ring 3 is substantially parallel to the mounting surface 7 at a predetermined height. The predetermined height is determined by the inner diameter of the ring 3 and the height of the stick 1. The lower end of the stick 1 is provided with a microswitch 9. In Figure 2 the microswitch 9 has both a function of switching and a function of returning and holding the stick 1 to its initial position when the stick 1 is tilted. Specifically, with a method which joins an elastic body, such as an elastic rubber or spring, to the lower end portion of the stick 1 and joins a switch to this elastic body, a vertical input can be detected and the stick 1 can be returned and held to the initial position. The microswitch 9 is provided on the mounting surface 7.

In Figure 2 the cross section of the ring 3 is rectangular or square, but it may be circular. The configuration of the support member 5 is also arbitrary. The support member 5 and the ring 3 may be joined together by adhesion or insertion, or they may be formed integrally. Also, the support member 5 and the mounting surface 7 may be joined together in a similar manner. A sensor 11 detects a direction in which the stick 1 is tilted and a force applied to the ring 3 by the stick 1, and in the case of Figure 2 it is preferable that the sensor 11 be constituted by a strain sensor such as a strain gauge sensor. The sensor 11 is attached to the side surface of the support member 5, as shown in Figure 2, or it can be attached near the proximal portion of the stick 1 on the mounting surface 7. While the microswitch 9 has been described as a switch, a device such as a pressure sensor may be provided instead of the switch, because there are cases where an analog input in a direction perpendicular to the mounting surface 7 is needed depending upon applications.

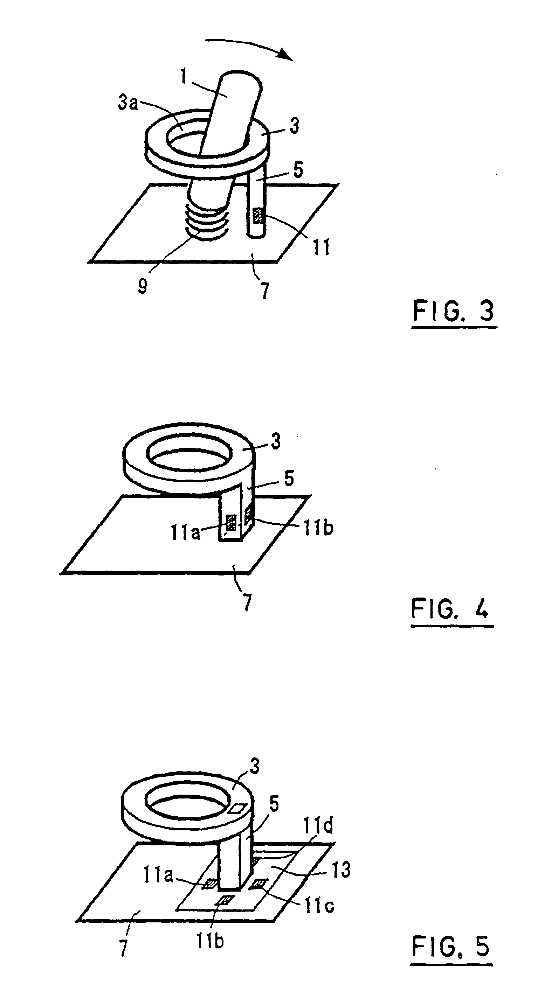

The operation of the pointing device of Figure 2 will next be described. The upper end of the stick 1 rotates on the joined portion between the microswitch 9 and the mounting surface 7. However, until the stick 1 contacts with the ring 3, the motion of the stick 1 is not detected by the sensor 11. This space between the stick 1 and the ring 3 is a physically provided insensitive zone. When the upper end of the stick 1 is tilted at a large angle, it will be brought into contact with the inner side (3a) of the ring 3, as shown in Figure 3. If the upper end of the stick 1 is further tilted, the force applied to the stick 1 will be applied to the ring 3 in the direction in which the stick 1 is tilted. The force, applied to the ring 3, is detected as strain by the sensor 11 provided on the support member 5 through the support member 5. The output from the sensor 11 is converted in a subsequent process to a signal corresponding to the direction and strength of the force. Thus, if a force is applied to the stick 1 across the physical insensitive zone, a user will feel a physical response on the user's fingers. This will give a feeling of click when a subsequent digital signal is input. On the other hand, if the user releases user's hold of the stick 1 or if the force applied to the stick 1 becomes smaller than the restoring force of the elastic body of the microswitch 9, the stick 1 will try to return to the initial position. With this, the user can manipulate the stick in any direction with even sensibility.

In the case where the user selects one item from one or a plurality of items, as shown on the left side of Figure 1, the user depresses the stick 1. The depressed stick 1 depresses the microswitch 9 through the elastic body joined to the lower end of the stick 1. Then, the microswitch 9 outputs an ON signal. At this time, since there is an insensitive zone between the stick 1 and the ring 3, the indicated position does not change so long as the stick 1 does not touch the ring 3, even if the stick were slightly depressed back and forth or left and right. Therefore, even in a groping situation, the selecting operation can be performed at a desired position. Also, in the case where a double click operation is performed, although the same point must be selected and indicated twice, a pointing device such as this can easily select and indicate the same point twice. Furthermore, in certain circumstances, if the stick 1 is depressed and tilted in a desired direction, the pointing device of the present invention can perform a drag operation which is generally performed with a mouse.

As described above, the pointing device of the present invention has three important mechanisms: (a) a mechanism (the ring 3, the support member 5, the mounting surface 7, and the sensor 11 of Figure 2) which has a physical insensitive zone and detects horizontal indication made by the stick 1, (b) a mechanism for detecting a force in a direction perpendicular to the mounting surface 7, and (c) a mechanism of returning and holding the stick 1 to the initial position. Therefore, variations will hereinafter be described for each mechanism.

### (a) Mechanism for detecting horizontal indication:

### 1. Scaffold type:

As shown in Figure 2, the configuration, where the ring 3 is contacted by the stick 1 and supported by the support member 5, is referred to as a scaffold type. Figure 4 shows only a portion constituting this scaffold. A ring 3 is the same as the aforementioned, while a support member 5 employs a square pillar. Sensors 11a and 11b are provided on the four side surfaces of the square pillar (in Figure 4 only two side surfaces are shown). Even in such a structure, a force which is applied to the ring 3 can be sufficiently detected.

Also, a detecting base 13, to which a force is further transmitted through the support member 5, can be joined to the support member 5 and sensors 11a, 11b, 11c, and 11d can be provided on this detecting base 13 (Figure 5). For the detecting base 13 and the support member 5, they are formed integrally or separately as long as they are joined together so that the force applied to the ring 3 can be easily detected. Also, both the detecting base 13 and the mounting surface 7 are sufficiently fixed together so that strain can be easily detected. In Figure 5 the support member 5 is fixed to the ring 3 by insertion.

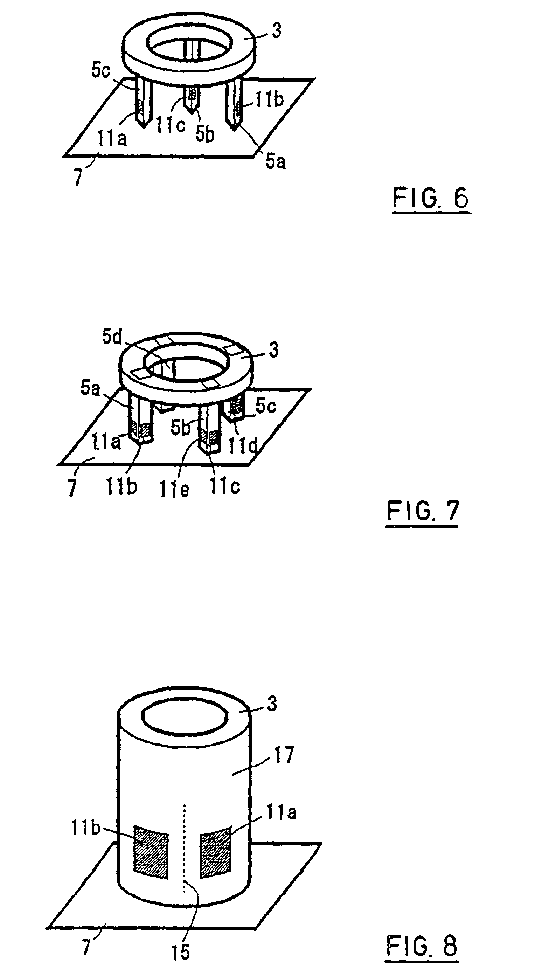

In Figure 6 there is shown an example of the case where three support members 5a, 5b, and 5c are employed. Sensors 11a, 11b, and 11c can also be provided on the support members 5a, 5b, and 5c. In Figure 6, while the support members 5a, 5b, and 5c employ triangular pillars, they may be square pillars.

Figure 7 shows an example of the case where four support members 5a, 5b, 5c, and 5d are employed. The support members 5a, 5b, 5c, and 5d are fixed to the ring 3 by insertion. Also, sensors 11a, 11b, 11c, 11d, and 11e are provided on the side surfaces of each pillar (sensors on hidden surfaces are omitted). In this case 16 sensors are provided. Of course, a single sensor or two sensors may be provided on each pillar.

In a scaffold type such as described above, the number of support members and the configuration of support members are arbitrary, and the number of sensors may be any number if vectors on a horizontal plane can be detected. Also, the sensor may be provided on the side surface of a support member or on the detecting base provided on each support member.

### 2. Sleeve type:

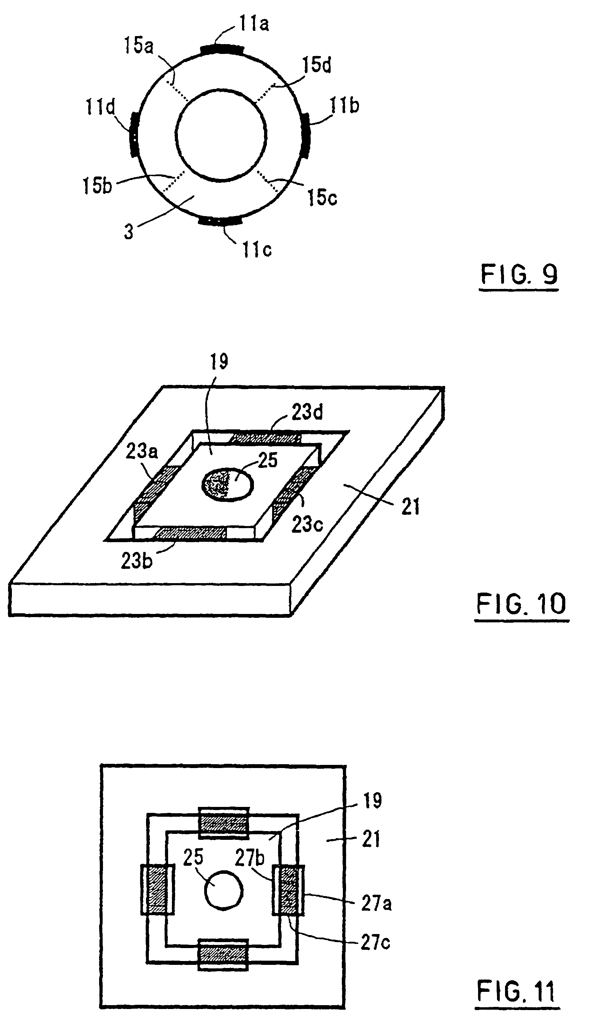

Figure 8 shows an example of the case where a sleeve 17 with an inner diameter larger than the outer diameter of the stick 1 is employed. In the figure, the stick 1 and the switch are omitted. As shown in Figure 8, if the sleeve 17 is provided on the mounting surface 7, the support member 5 is not needed as in the case of the scaffold type. In the example of Figure 8, four sensors 11a, 11b, 11c, and 11d are attached to the side surface of the sleeve 17 (see Figure 9). Also, as in the case of Figure 5, the sleeve 17 may be provided on the detecting base and sensors may be provided on the detecting base. In addition, it is possible to provide a slit 15 (slits 15a, 15b, 15c, and 15d in Figure 9) so that the sleeve 17 can be easily bent. The number of slits 15 is arbitrary as in the number of support members in the scaffold type. The number of sensors may be any number if vectors on a horizontal plane can be detected. In Figure 8, while the sleeve 15 has the same inner diameter and the same outer diameter from its upper end to its lower end, the sleeve 15 may be replaced with a sleeve having large inner and outer diameters at its upper end or a sleeve having large inner and outer diameters at its lower end.

### 3. Plate sliding mechanism:

As shown in Figure 10, there is a method which fixes a force detecting plate 19 to a plate support board 21 through pressure sensors 23a, 23b, 23c, and 23d such as piezo elements. The force detecting plate 19 is formed with a hole 25 into which the stick 1 (not shown) is inserted. When the stick 1 pushes the hole 25 in a horizontal direction, the force detecting plate 19 will be pushed, and the pressure sensors 23a, 23b, 23c, and 23d will detect changes in the pressure, respectively. With the result of the detection, it is detected in which direction and to what extent a force is applied.

As a method of detecting force, there is another method using electrostatic capacity change in addition to pressure sensors. For example, as shown in Figure 11, a capacitor 27 is provided at the place where the pressure sensor was provided. More specifically, a first electrode 27a is provided on the inner side of a plate support board 21 and a second electrode 27b is provided on the outer side of the plate support board 21. Between the two electrodes a dielectric substance 27c is interposed. With this arrangement, if a hole 25 is pushed by the stick 1 (not shown) horizontally, the force detecting plate 19 will be pushed and the electric capacities of the four capacitors will change. By detecting these changes, the direction and strength of the force applied by the stick can be detected.

While the outer configuration of the force detecting plate 19 has been shown as a rectangular or a square, the present-invention is not limited to these configurations. For example, the plate 19 may be circular or polygonal in shape. Also, the number of pressures sensors and the number of electrostatic capacity sensors are not limited to four, but more sensors can be employed. In addition, the number of sensors can be determined according to the outer configuration of the force detecting plate 19. It is preferable that the inner configuration of the plate support board 21 be matched with the outer configuration of the force detecting plate 19, but it is not limited to that configuration. Other configurations are also possible if they can stably support the force detecting plate 19 and if sensors can be easily provided.

Although not mentioned in the description of the scaffold type, the outer configuration of the ring 3 does not need to be matched with the inner configuration. As shown in the example of the plate sliding type, the outer configuration of the ring 3 may be square or polygonal in shape.

### (b) Mechanism of detecting vertical force:

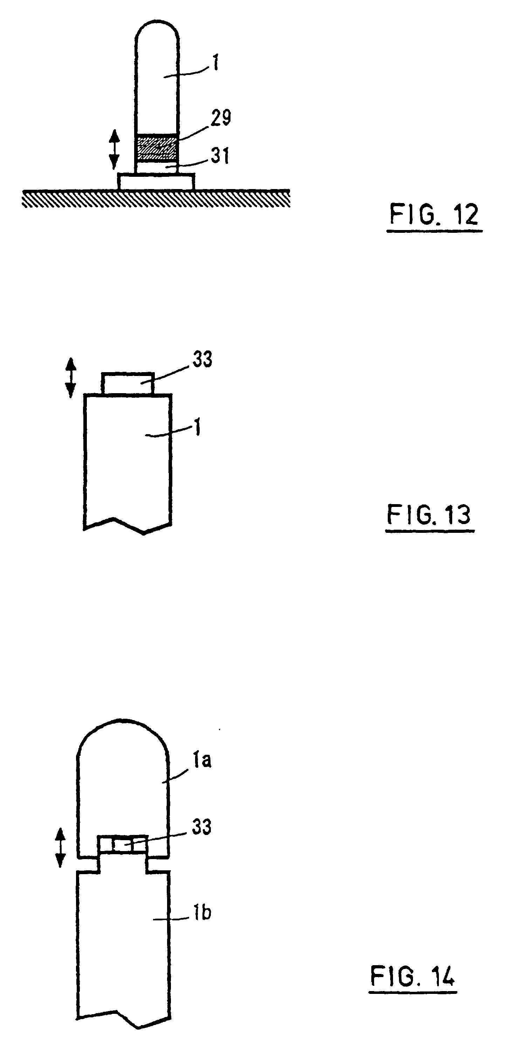

In the example of Figure 2 the switch was joined to the lower end of the stick 1. For example, in Figure 12 an elastic body 29 for returning the stick 1 to its initial position is joined to the lower end of the stick, and a switch 31 is joined to the elastic body. Here, a force detecting member such as the ring 3 is omitted for convenience. Since the switch 31 inputs only ON/OFF information, pressure sensors can be provided instead of the switch 31 as needed. In such a case, an analog signal can be input.

In the example of Figure 12 the switch 31 is positioned at the lower end of the stick 1. However, the present invention is not limited to a position such as this. For example, it is also possible to provide the switch 33 on the upper end of the stick 1, as shown in Figure 13. However, if the switch 33 can be easily depressed, the stick 1 cannot be freely controlled and therefore the switch 33 need to be constructed so that it is depressed only when sufficient force is applied. In addition, as shown in Figure 14 (which is a vertical sectional view), the switch 33 can be provided in the intermediate portion of the stick 1. That is, the upper portion 1a of the stick 1 is formed with a recess portion, while the lower portion 1b is formed with a protruding portion. The switch 33 is provided on the upper end of the lower portion 1b. With this arrangement, the switch 33 is turned on when the upper portion 1a of the stick 1 is pushed down. Conversely, the upper portion 1a and the lower portion 1b may be formed with a protruding portion and a recess portion, respectively. In this case the switch 33 is provided on the recess portion of the lower portion 1b so that the switch 33 is turned on by the protruding portion of the upper portion 1a of the stick 1 when the stick 1 is pushed down.

While a description has not been made of the design of the upper end of the stick 1, the surface may be processed or a cap made of another material may be provided so that users can easily manipulate the stick 1.

### (c) Mechanism of returning and holding the stick 1 to its initial position:

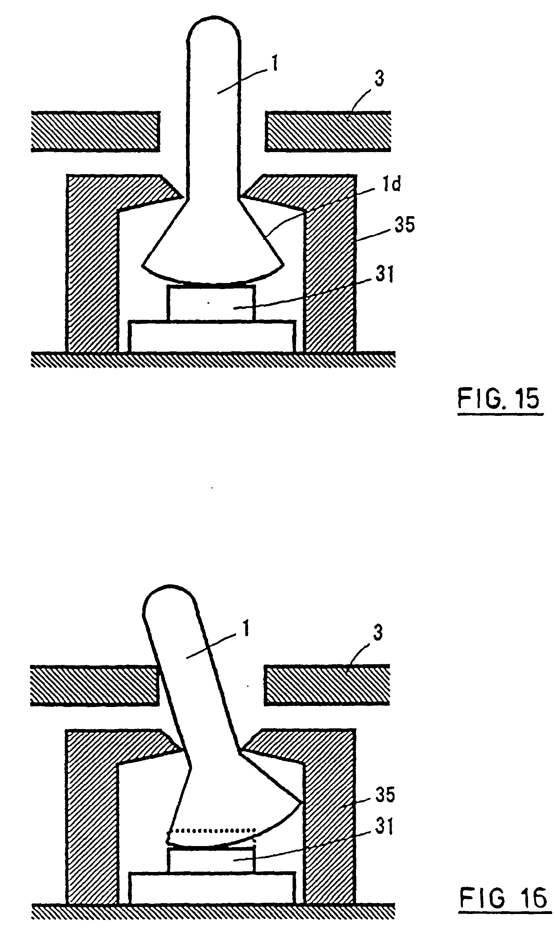

The first example will be described with Figures 15 and 16 which are vertical sectional views. As shown in Figure 15, the lower portion of a stick 1 is formed with a taper portion 1d. In this example, although the lower portion of the stick 1 is not joined to the switch 31, the lower portion contacts with the switch 31 in the initial state. This stick 1 is held by a stick holding mechanism 35. A ring or a force detecting plate 3 is provided above the stick holding mechanism 35. In this initial state, if the stick 1 is depressed, the switch 31 will be pushed by the lower end of the stick 1 and a selection signal will be generated.

Thereafter, if the stick 1 is tilted so as to contact with the ring or the force detecting plate 3, the centre of the stick 1 will be shifted from the rotational axis by the lower taper portion of the stick 1, and the switch will be depressed by an infinitesimal amount. The dotted line portion of Figure 16 represents the initial position of the switch 31 and the solid line portion represents the state where the stick 1 was depressed an infinitesimal amount. Even if the switch is depressed an infinitesimal amount in this way, no selection signal is generated and the restoring force of the spring of the switch 31 acts. Then, if the stick 1 is released, it will be returned to the initial position by the restoring force of the spring of the switch 31. In this way, the stick 1 can be returned and held to the initial position. The stick holding mechanism 35 need to be constructed so that the switch 31 does not make a signal even when the stick 1 is maximally tilted.

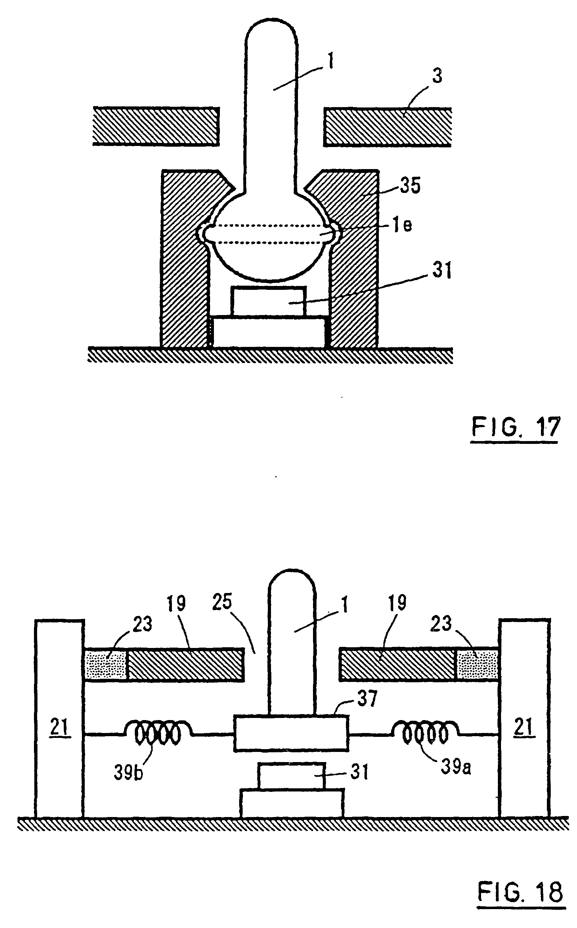

The second example will be described with Figure 17 which is a vertical sectional view. The lower portion of a stick 1 is formed into a spherical shape, and a protrusion 1e is provided near the equator of the spherical shape. On the other hand, the stick holding mechanism 35 has a configuration which can hold the lower spherical portion of the stick 1, and the mechanism 35 is formed with a groove in correspondence with the protrusion 1e. Above this stick holding mechanism 35 there is provided the ring or the force detecting plate 3. The switch 31 need not to be held in contact with the lower end portion of the stick 1. If the stick 1 is pushed downward, the pressure will cause the protrusion 1e to be disengaged from the groove of the stick holding mechanism 35, and the stick 1 will be moved downward. Consequently, the switch 1 is depressed. The stick 1 is returned to the original position by the spring of the switch 31 and the inclination of the groove of the stick holding mechanism 35. In the case of such a structure, a feeling of click can be given to the user's fingers when the protrusion 1e is disengaged from the groove.

Also, when the stick 1 is tilted, the protrusion 1e is disengaged from the groove formed in the stick holding mechanism 35. However, the stick 1 is returned to the original position by the inclination existing near the groove. In the case where the stick 1 is tilted with a large angle, the switch 31 is depressed an infinitesimal amount and therefore the stick 1 is returned to the original position by making use of the restoring force of the spring of the switch 31. If this configuration is adopted, a feeling of click can also be given to the user's fingers even when the stick 1 is tilted.

In the mechanism of detecting horizontal indication, when the plate sliding mechanism is adopted, the detecting mechanism will be simple if the following mechanism is adopted. In Figure 18 which is a vertical sectional view, a plate support board 21 supports a force detecting plate 19 through a pressure sensor 23. A stick 1 is held so as to protrude upward from the hole 25 of the force detecting plate 19. This stick 1 is supported by a stick support plate 37, which in turn is held by means-of elastic bodies 39a and 39b such as rubber or springs. The number of elastic bodies 39 is not limited to the two elastic bodies. The elastic bodies are provided so that the stick support plate 37 can be fixed loosely. The positions at which the elastic bodies are provided are likewise determined so that the stick support plate 37 can be fixed loosely. A switch 31 is provided under the stick support plate 37. In this embodiment the stick support plate 37 and the switch 31 need not to be in contact with each other.

Thus, since the stick 1 is loosely fixed, it can be returned to the initial position by the restoring force of the elastic body 39 even when the stick 1 is depressed downward to depress the switch 31 or even when the stick 1 is tilted or slid to push the force detecting plate 19 in a horizontal direction.

While various variations are possible in addition to the aforementioned, hardware satisfying the mechanical features of the pointing device of the present invention is completed by combining (a) a mechanism having a physical insensitive zone and detecting horizontal indication made by the stick 1, (b) a mechanism for detecting a force in a direction perpendicular to the mounting surface 7, (c) a mechanism for returning and holding the stick 1 to the initial position, and the variations of the mechanisms.

### (2) Signal processing:

Infinitesimal signals resulting from strain change, pressure change, and electrostatic capacity change are output from the horizontal-vector detecting sensors. These signals are amplified by amplifiers and are processed by a signal processor. In a signal processor which handles only digital signals, analog signals are first converted to digital signals by A/D converters and then the digital signals are processed. In a signal processor which can handle analog signals, the output of the amplifier can be employed as it is. This signal processor handles signals from a plurality of sensors and outputs signals corresponding to the direction and strength of an applied force in a processing manner known in background art. For example, it outputs signals such as V for an x-axis direction and W for a y-axis direction. In this embodiment, only the direction and strength of an applied force are output. From such signals, it is determined by another program how a cursor is moved on the screen of a display unit and how the screen is scrolled. For example, the signals are used to indicate a position on the screen or determine the moving direction, speed, or acceleration of the cursor or scrolling. In the present configuration, a signal V in an x-axis direction and a signal W in a y-axis direction, described above, are given to the program of an information processing apparatus by the signal processor.

In the present configuration, signal processing becomes necessary not only for horizontal indication but also for vertical indication. In the case where vertical indication is performed by a switch, simply the ON/OFF signal of the switch can be given to the program of the information processing apparatus. However, in the case of a sensor which outputs an analog signal, such as a pressure sensor, there is the need to process the analog signal. The analog signal in vertical direction is only one direction, so only a signal representing strength of force is output. In such a case, this signal representing strength of force is converted to a digital signal. The digital signal is output to a requisite program within the information processing apparatus. The signal generally is employed to indicate the amount of vertical movement in three-dimensional space.

### (3) Manipulation process:

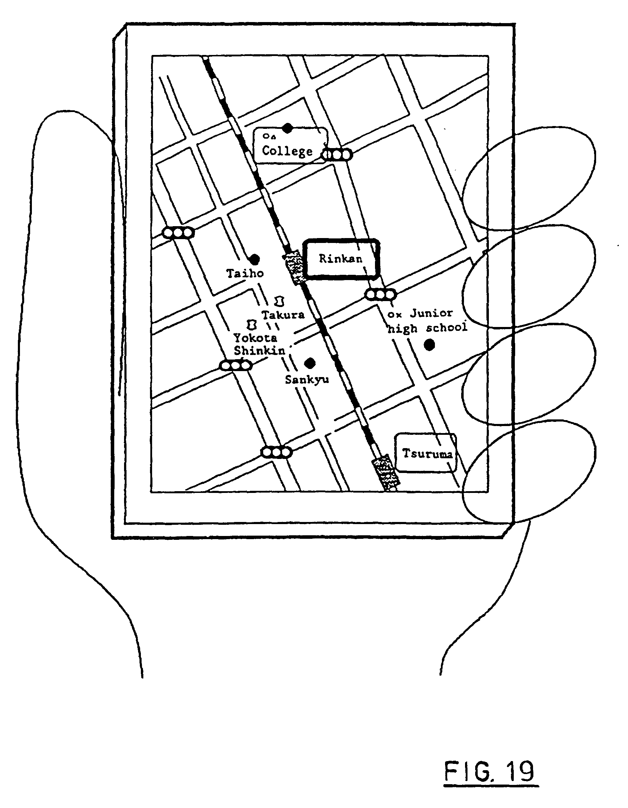

As described above, a process is required which can generate both an analog input and a digital input from one pointing device. For example, in addition to the change of a focused item to indicated directions shown on the left side of Figure 1 (processing by a digital input) and the scrolling of the screen shown on the right side of Figure 1 (processing by an analog input), there are single-item movement and item movement according to an analog input. The combination of item movement and screen scrolling can also be used in the case where items are scattered on the screen like Figure 19, a cursor is moved to an item in the direction of a digital input by the digital input and the display screen is scrolled in the direction of an analog input by the analog input. Furthermore, in the case where a portable information processing apparatus is a television set, the channel can be switched when a digital signal is input, and the volume can be varied when an analog signal is input.

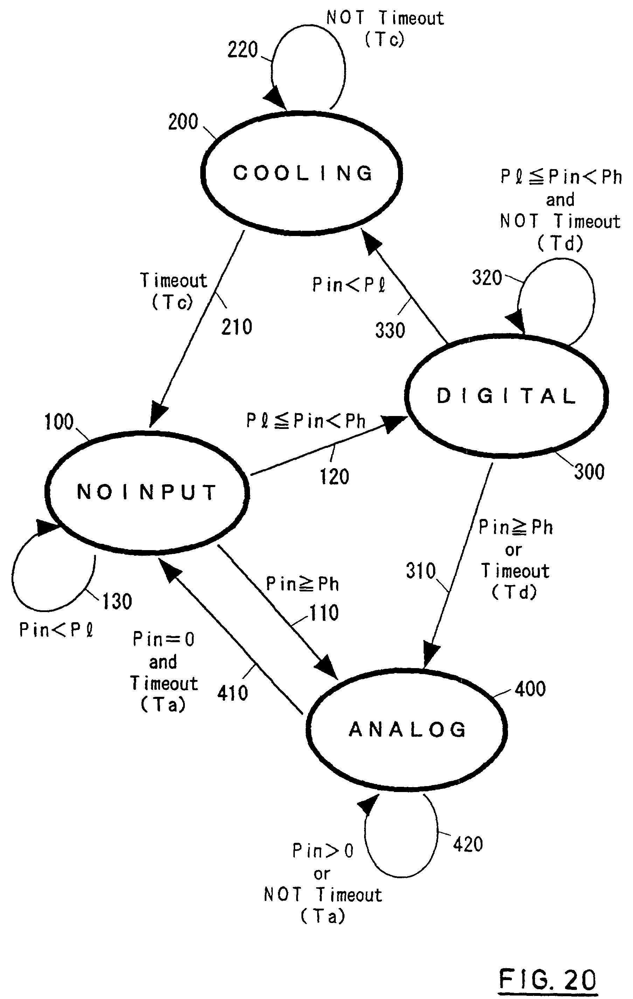

The switching between a digital input and an analog input is performed by a state machine such as that shown in Figure 20. In the state machine of Figure 20, both the strength of force Pᵢₙ from the pointing device and time information for time-out processing are input, and there are provided four states. In the following description, the strength of force Pᵢₙ and the time information are handled as evaluation values and state transition is caused by the evaluation values, but state transition may be caused by evaluating the amount of change and the direction of an applied force. Since the inputs from the pointing device generally are signals V and W in x-axis and y-axis directions, the evaluation value Pᵢₙ employs a value such as (V² + W²)^{0.5}. The states are NOINPUT state 100 representing an initial state and a no-input state, COOLING state 200 which is a cooling-off state for preventing chattering, DIGITAL state 300 in which a digital input is being processed, and ANALOG state 300 in which an analog input is being processed.

As previously shown, the initial state is the NOINPUT state 100. In the case where an input strength of force Pᵢₙ is less than Pₗ, the current state stays in this NOINPUT state 100, as shown by 130 in Figure 20. This Pₗ is a threshold value which means that an input less than this value is ignored. The aforementioned mechanical structure of the embodiment of the present invention has the physical insensitive zone, so no force will be detected even if the stick 1 is slightly tilted. Therefore, in a mechanical structure such as described above, this Pₗ can be taken to be zero. However, since there are cases where the stick 1 slightly contacts with the ring 3 by mistake and then some value is detected, it is also possible to set P₁ to an appropriate value. Next, when Pₗ ≤ Pᵢₙ < Pₕ, a transition is made from the NOINPUT state 100 to the DIGITAL state 300, as shown by 120. The Pₕ is a second threshold value which determines whether a transition to an analog input is made or not. If Pᵢₙ ≥ Pₕ, a transition will be made from the NOINPUT state 100 to the ANALOG state 400, as shown by 110. At this time, the analog input processing of the strength of force Pᵢₙ is performed for the direction of an applied force.

After the transition to the DIGITAL state 300, in the case where a force equal to or greater than P₁ and less than Pₕ continues to be applied, the current state stays in the DIGITAL state 300 until time-out T_{d}, as shown by 320. When the applied force becomes less than Pₗ, a transition is made from the DIGITAL state 300 to the COOLING state 200, as shown by 330. When this transition is made, digital input processing is performed for the direction of the applied force. For the direction, a digital input may be made in one direction of 4 directions or 8 directions which have previously been prescribed. On the other hand, in the case where the applied force is less than Pₕ but thereafter becomes equal to or greater than Pₕ or in the case where a force less than Pₕ is being applied but the time becomes greater than time-out T_{d}, a transition is made from the DIGITAL state 300 to the ANALOG state 400, as shown by 310. During this transition, the analog input processing of the strength and the direction of the applied force is performed.

If once a transition to the COOLING state 200 is made, the current state will stay in this COOLING state 200 until time-out T_{c} elapses, as shown by 220. After time-out T_{c} elapses, the state returns to the NOINPUT state 100 which is an initial state, as shown by 210.

If, on the other hand, a transition to the ANALOG state 400 is made, the current state will stay in the ANALOG state 400 when the applied force is greater than zero or in the case where time-out Tₐ has not elapsed even when the force is zero, as shown by 420. During this stay, the analog input processing of the direction and strength of the applied force is performed. If an applied force is 0, the input will be handled as 0. In this state, both the direction in which force is applied and the strength can be varied, and analog input processing is performed in correspondence with the variation. Then, if the period during which Pᵢₙ = passes time-out Tₐ, the ANALOG state 400 will return to the NOINPUT state 100, as shown by 410.

Pₕ is determined by both the relation with Pₗ and the hardware structure. That is, in the case where the difference between Pₗ and Pₕ is small, even when a signal was input with the intention of a digital input, it would be determined as an analog input, and consequently, this determination is inconvenient to users. If, on the other hand, Pₕ is too large, force will be increased to input an analog signal. Consequently, user's fingers will easily get fatigued or the pointing device need to be structurally reinforced. Tₐ, T_{d}, and T_{c} also need to be determined in view of convenience and hardware structure.

The present method is not limited to the aforementioned definition of state and how to make a transition. For example, while the COOLING state 200 has been defined, the present method can be carried out without this definition. Also, while the present configuration has been constructed so that a transition is made from the DIGITAL state 300 to the ANALOG state 400 when time-out T_{d} elapses and when Pₗ ≤ Pᵢₙ < Pₕ, such time-out does not always need to be defined.

In the mechanical structure of the embodiment of the present invention, it has been described that an analog input is also made possible for a vertical direction. In such a case, the state machine of Figure 20 can be employed to indicate this vertical direction. That is, a digital input and an analog input are controlled by the manner in which vertical force is applied.

While the foregoing description has been based on the aforementioned mechanical structure of the embodiment of the present invention, the range of application of the aforementioned state machine is not limited to the aforementioned mechanical structure. That is, in addition to the pointing device shown in Figure 2 provided with (a) a mechanism having a physical insensitive zone and detecting horizontal indication made by the stick 1, (b) a mechanism for detecting a force in a direction perpendicular to the mounting surface 7, and (c) a mechanism for returning and holding the stick 1 to the initial position, the state machine is applicable to a conventional pointing device such as a track ball, a mouse a joy stick, or a pointing device on a keyboard which is described in said Japanese Published Unexamined Patent Application No. 7-302162.

Since such a conventional pointing device does not have a physical insensitive zone, it is difficult for users to obtain a feeling of click when a digital signal is input. However, it is possible to execute a digital input and an analog input in accordance with the state machine shown in Figure 20 by the amount of rotation of the ball of a mouse or a track ball or the amount of inclination of the stick of a joy stick. In this case a conventional pointing device requires an additional switch for selection. In the pointing device of the embodiment of the present invention, digital and analog inputs, and selection can be performed without releasing user's hold of the stick and employing another finger, so it can be said that the invention is a more suitable pointing device for the purpose.

While the pointing device of the present invention is ideally employed in a portable information processing apparatus, it is also possible to separately make this pointing device to connect to normal information processing apparata or to place at an appropriate position on a keyboard. The connection of the pointing device to normal information processing apparatus can be made by wire or radio. In addition to information processing apparata, it is also possible to provide the pointing device of the present invention in a remote controller of a television set for indicating channel change by a digital input and volume change by an analog input. Even in such a case, digital and analog inputs, and selection (a vertical analog input as needed) can be performed with a single stick, so the pointing device of the present invention becomes more convenient.

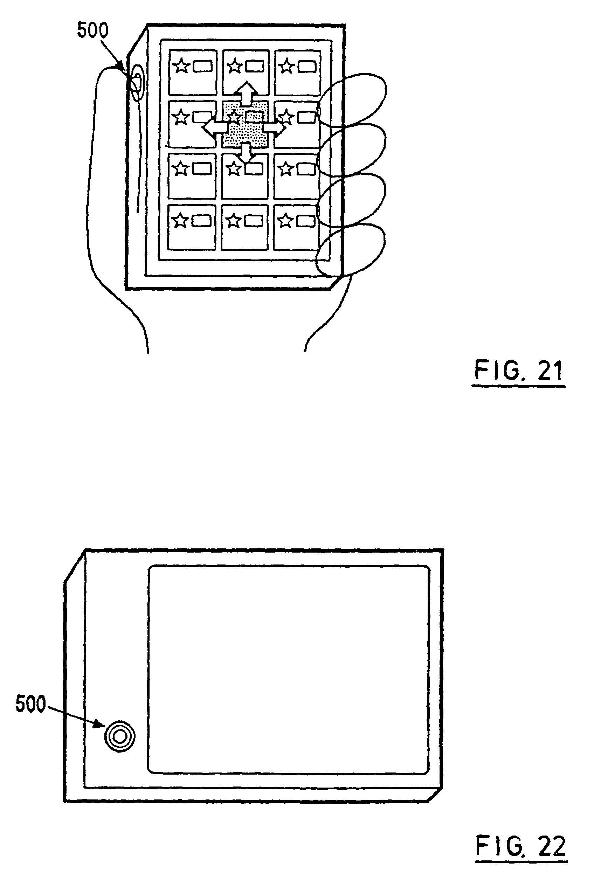

Even in the case where the pointing device of the present invention is provided in a portable information processing apparatus which is the original usable form, there is the case where a pointing device 500 is provided on the side surface of the information processing apparatus such as that shown in Figure 21 (the stick becomes substantially parallel to a display device), the case where a pointing device 500 is provided on the surface of the display device of an information processing apparatus such as that shown in Figure 22, and the case where the pointing device is provided on the opposite surface of the display device.

Finally, if a mechanical structure is made into the aforementioned structure, there will be also the advantage that waterproofing can be easily performed, because the structure has no portion which infinitely rotates like track balls or depressible dials.

Thus has been described an input unit which allows (1) digital movement to be made from a current item to the next selectable item, (2) two-dimensional movement to be made from a current item to upper, lower, left, and right items, (3) high-speed movement and scrolling to be made from a current item to a far item, (4) manipulation to be performed with one hand, including selection (invocation) of items, and (5) manipulation to be performed even by feel without looking at the display.

Also, there has been described a method which processes input signals from an input unit to implement the aforementioned manipulations.

## Claims

1. A pointing device comprising :
a stick (1) having an axis;
a vector detection mechanism (3, 11) for detecting motion of the stick in a direction substantially perpendicular to the stick axis, the mechanism being located around and physically spaced apart from the stick to define an empty void and physically insensitive zone therebetween in which zone the vector detection mechanism does not detect motion of the stick, and wherein the vector detection mechanism outputs a signal corresponding to a contact direction and the strength of a force applied in the contact direction when the stick physically contacts the vector detection mechanism; and
a detector (9) for detecting a force applied along the axial direction of the stick.

2. A pointing device as claimed in Claim 1, further comprising a mechanism for returning the stick shifted from its initial position to the initial position.

3. A pointing device as claimed in Claim 1 or Claim 2, wherein the detector for detecting a force is a switch.

4. A pointing device as claimed in Claim 3, wherein the switch is provided in the stick.

5. A pointing device as claimed in Claim 3, wherein the switch is provided at a position which is pushed by one end of the stick when the other end of the stick is pushed in the axial direction of the stick.

6. A pointing device as claimed in any preceding claim, wherein the vector detection mechanism comprises:
a member placed around the stick, positioned away from the stick by a predetermined distance and having a circular portion which is contactable by the stick; and
a sensor for detecting the strength and direction of a force applied to the member by the stick.

7. A pointing device as claimed in Claim 6, wherein the vector detection mechanism further comprises a support structure which supports the member and wherein the sensor detects the strength and direction of a force applied to the member, the force transmitted through the support structure.

8. A portable information processing apparatus comprising:
a pointing device as claimed in any of claims 1 to 7; and
a display device.

9. A portable information processing apparatus as claimed in Claim 8, wherein the axis of said stick is provided substantially parallel to said display device.

10. A portable information processing apparatus as claimed in Claim 8 or Claim 9, further comprising:
a controller responsive to a signal output from said vector detection mechanism for judging whether an evaluation value of said force vector satisfies a predetermined condition, and for instructing the execution of a first kind of operation according to said evaluation value when the evaluation value satisfies the predetermined condition, and for instructing the execution of a second kind of operation when said evaluation value does not satisfy said predetermined condition.

## Patentansprüche

1. Zeigeeinheit, die Folgendendes umfasst:
einen Stab (1) mit einer Mittelachse;
einen Vektorerkennungsmechanismus (3, 11), mit dem eine im Wesentlichen vertikal zur Mittelachse des Stabs gerichtete Bewegung des Stabs erkannt wird, wobei der Mechanismus um den Stab herum und räumlich von dem Stab getrennt angeordnet ist, so dass eine Lücke und eine physisch berührungsunempfindliche Zone dazwischen gebildet werden, wobei in der Zone der Vektorerkennungsmechanismus eine Bewegung des Stabs nicht erkennt und wobei der Vektorerkennungsmechanismus ein Signal ausgibt, das einer Kontaktrichtung und der Stärke einer Kraft entspricht, die in der Kontaktrichtung ausgeübt wird, wenn der Stab den Vektorerkennungsmechanismus physisch berührt; und
einen Sensor (9) für die Erkennung einer Kraft, die entlang der Achsenrichtung des Stabs ausgeübt wird.

2. Zeigeeinheit nach Anspruch 1, die weiter einen Mechanismus umfasst, mit dem der aus seiner Ausgangsstellung bewegte Stab in die Ausgangsstellung zurückgebracht wird.

3. Zeigeeinheit nach Anspruch 1 oder Anspruch 2, wobei der Sensor für die Erkennung einer Kraft ein Schalter ist.

4. Zeigeeinheit nach Anspruch 3, wobei der Schalter in dem Stab bereitgestellt wird.

5. Zeigeeinheit nach Anspruch 3, wobei der Schalter in einer Stellung bereitgestellt wird, bei der diese von einem Ende des Stabs heruntergedrückt wird, wenn das andere Ende des Stabs entlang der Achsenrichtung des Stabs bewegt wird.

6. Zeigeeinheit nach einem beliebigen der vorangegangenen Ansprüche, wobei der Vektorerkennungsmechanismus Folgendes umfasst:
ein um den Stab herum angeordnetes Bauteil, das einen vorgegebenen Abstand zu dem Stab aufweist und über einen kreisförmigen Bereich verfügt, mit dem der Stab in Berührung kommen kann; und
einen Sensor für die Erkennung der Stärke und Richtung einer Kraft, die durch den Stab auf das Bauteil ausgeübt wird.

7. Zeigeeinheit nach Anspruch 6, wobei der Vektorerkennungsmechanismus weiter eine Stützstruktur umfasst, die das Bauteil trägt, und wobei der Sensor die Stärke und Richtung einer auf das Bauteil ausgeübten Kraft erkennt, wobei die Kraft über die Stützstruktur übertragen wird.

8. Tragbare Datenverarbeitungsvorrichtung, die Folgendes umfasst:
eine Zeigeeinheit nach einem beliebigen der Ansprüche 1 bis 7; und
eine Bildschirmeinheit.

9. Tragbare Datenverarbeitungsvorrichtung nach Anspruch 8, wobei die Mittelachse des Stabs im Wesentlichen parallel zu der Bildschirmeinheit verläuft.

10. Tragbare Datenverarbeitungsvorrichtung nach Anspruch 8 oder Anspruch 9, die weiter Folgendes umfasst:
eine Steuereinheit, die auf eine Signalausgabe des Vektorerkennungsmechanismus anspricht, um zu ermitteln, ob ein Prüfwert des Kraftvektors eine vorgegebene Bedingung erfüllt, und um die Ausführung einer ersten Operationsart gemäß dem Prüfwert zu veranlassen, wenn der Prüfwert die vorgegebene Bedingung erfüllt, und um die Ausführung einer zweiten Operationsart zu veranlassen, wenn der Prüfwert die vorgegebene Bedingung nicht erfüllt.

## Revendications

1. Un dispositif de pointage comprenant :
un manche (21) ayant un axe ;
un mécanisme de détection de vecteur (3, 11), pour détecter le déplacement du manche dans une direction sensiblement perpendiculaire à l'axe du manche, le mécanisme étant placé autour et physiquement espacé du manche, pour définir un espace vide et une zone physiquement insensible entre eux, zone dans laquelle le mécanisme de détection de vecteur ne détecte pas de déplacement du manche et dans lequel le mécanisme de détection de vecteur produit un signal, correspondant à une direction de contact et à l'intensité d'une force appliquée dans la direction de contact, lorsque le manche entre en contact physique avec le mécanisme de détection de vecteur ; et
un détecteur (9), pour détecter une force appliquée dans la direction axiale du manche.

2. Un dispositif de pointage selon la revendication 1, comprenant en outre un mécanisme pour produire le rappel du manche, s'étant déplacé de sa position initiale, afin de le faire revenir à cette position initiale.

3. Un dispositif de pointage selon la revendication 1 ou la revendication 2, dans lequel le détecteur devant détecter une force est un interrupteur.

4. Un dispositif de pointage selon la revendication 3, dans lequel l'interrupteur est prévu dans le manche.

5. Un dispositif de pointage selon la revendication 3, dans lequel l'interrupteur est prévu en une position à laquelle il y a poussée par une extrémité du manche, lorsque l'autre extrémité du manche est poussée dans la direction axiale du manche.

6. Un dispositif de pointage selon l'une quelconque des revendications précédentes, dans lequel le mécanisme de détection de vecteur comprend :
un organe, placé autour du manche, positionné à l'écart du manche de la valeur d'une distance prédéterminée et ayant une partie circulaire susceptible d'être mise en contact par le manche ; et
un capteur pour détecter l'intensité et la direction d'une force appliquée à l'organe par le manche.

7. Un dispositif de pointage selon la revendication 6, dans lequel le mécanisme de détection de vecteur comprend en outre une structure support qui supporte l'organe, et dans lequel le capteur détecte l'intensité et la direction d'une force appliquée à l'organe, la force étant transmise par la structure support.

8. Un dispositif de traitement d'information portable comprenant :
un dispositif de pointage selon l'une quelconque des revendications 1 à 7 ; et
un dispositif d'affichage.

9. Un dispositif de traitement d'information portable selon la revendication 8, dans lequel l'axe dudit manche est placé sensiblement parallèlement audit dispositif de pointage.

10. Un dispositif de traitement d'information portable selon la revendication 8 ou la revendication 9, comprenant en outre :
un contrôleur, réagissant à une sortie sous la forme d'un signal, depuis ledit mécanisme de détection de vecteur, pour apprécier si une valeur d'évaluation dudit vecteur de force satisfait à une condition prédéterminée, et pour donner instruction d'exécuter un premier type d'opération selon ladite valeur d'évaluation, lorsque la valeur d'évaluation satisfait à la condition prédéterminée, et pour donner instruction d'exécuter un deuxième type d'opération, lorsque ladite valeur d'évaluation ne satisfait pas à ladite condition prédéterminée.
